(19) Europäisches Patentamt
European Patent Office
Office européen des brevets

(11) EP 3 421 945 B1

(12) EUROPÄISCHE PATENTSCHRIFT

(45) Veröffentlichungstag und Bekanntmachung des Hinweises auf die Patenterteilung:
07.10.2020 Patentblatt 2020/41

(51) Int Cl.:
$G01F\ 1/66^{(2006.01)}$     $B06B\ 1/00^{(2006.01)}$
$G01H\ 5/00^{(2006.01)}$     $G10K\ 11/00^{(2006.01)}$
$G01H\ 3/00^{(2006.01)}$

(21) Anmeldenummer: 18000499.6

(22) Anmeldetag: 06.06.2018

(54) **VERFAHREN UND MESSEINRICHTUNG ZUR ERMITTLUNG EINER FLUIDGRÖSSE**

METHOD AND DEVICE FOR DETECTING A FLUID QUANTITY

PROCÉDÉ ET DISPOSITIF DE MESURE PERMETTANT DE DÉTERMINER UNE GRANDEUR DE FLUIDE

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 29.06.2017 DE 102017006505
19.09.2017 DE 102017008776

(43) Veröffentlichungstag der Anmeldung:
02.01.2019 Patentblatt 2019/01

(73) Patentinhaber: Diehl Metering GmbH
91522 Ansbach (DE)

(72) Erfinder:
• Mayle, Michael
DE - 91522 Ansbach (DE)
• Ploß, Peter
DE - 95445 Bayreuth (DE)

(74) Vertreter: Diehl Patentabteilung
c/o Diehl Stiftung & Co. KG
Stephanstraße 49
90478 Nürnberg (DE)

(56) Entgegenhaltungen:
WO-A1-2016/184709     WO-A2-2010/034713
DE-A1-102012 019 217     GB-A- 2 343 249
GB-A- 2 447 691     US-A1- 2010 000 331
US-B1- 7 152 490

**Beschreibung**

Die Erfindung betrifft ein Verfahren zur Ermittlung einer ein Fluid und/oder eine Fluidströmung des Fluids betreffenden Fluidgröße mit einer Messeinrichtung, die ein das Fluid aufnehmendes und/oder von dem Fluid durchströmbares Messrohr und einen ersten und einen zweiten voneinander beabstandet an dem Messrohr angeordneten Schwingungswandler umfasst. Daneben betrifft die Erfindung eine Messeinrichtung.

Eine Möglichkeit einen Durchfluss durch ein Messrohr zu messen, sind Ultraschallzähler. Bei diesen wird wenigstens ein Ultraschallwandler genutzt, um eine Ultraschallwelle in das durch das Messrohr strömende Fluid einzukoppeln, wobei diese auf einem geraden Weg oder nach mehreren Reflexionen an Wänden oder speziellen Reflexionselementen zu einem zweiten Ultraschallwandler geführt wird. Aus der Laufzeit der Ultraschallwelle zwischen den Ultraschallwandlern bzw. zwischen einem Laufzeitunterschied bei einer Vertauschung von Sender und Empfänger kann eine Durchflussgeschwindigkeit durch das Messrohr bestimmt werden.

Die DE 10 2012 019217 A1 beschreibt ein Verfahren zur Ermittlung einer ein Fluid und/oder eine Fluidströmung des Fluids betreffenden Fluidgröße mit einer Messeinrichtung gemäß dem Oberbegriff des unabhängigen Patentanspruchs 1.

Aus dem Artikel G. Lindner, "Sensors and actuators based on surface acoustic waves propagating along solid-liquid interfaces", J. Phys. D: Appl. Phys. 41 (2008) 123002, ist es bekannt, zur Anregung von geführten Wellen sogenannte Interdigitaltransducer zu nutzen, bei denen ein piezoelektrisches Element genutzt wird, das kammartig ineinandergreifende Steuerleitungen aufweist, um eine Anregung bestimmter Anregungsmoden geführter Wellen zu erreichen. Da notwendigerweise Scher-Moden des piezoelektrischen Elements angeregt werden, werden typischerweise keine hohen Wirkungsgrade der Anregung erreicht. Zudem ist eine relativ aufwändige, hochgenaue Lithographie erforderlich, um die erforderliche Elektrodenstruktur mit ausreichender Exaktheit aufzubringen, wobei häufig dennoch keine ausreichende Modenreinheit der Anregung erreicht wird.

Eine Anregung einer modenreinen geführten Welle ist jedoch für eine Nutzung in einem Ultraschallzähler hochrelevant, da der Winkel, in dem Kompressionsschwingungen in das Fluid abgestrahlt werden, von der Phasengeschwindigkeit der geführten Welle abhängt, die typischerweise in unterschiedlichen Anregungsmoden bei gleicher angeregter Frequenz unterschiedlich ist. Werden verschiedene Moden angeregt, so resultieren verschiedene Ausbreitungspfade für die Kompressionsschwingungen im Fluid, die allenfalls durch eine aufwändige Signalauswertung herausgerechnet werden können.

Der Erfindung liegt daher die Aufgabe zugrunde, ein Messverfahren anzugeben, das geführte Wellen zur Messung nutzt, wobei ein geringer Bauraumbedarf und ein einfacher Aufbau einer genutzten Messeinrichtung realisiert werden sollen und vorzugsweise eine möglichst modenreine Anregung von geführten Wellen erreicht werden soll.

Die Aufgabe wird erfindungsgemäß durch ein Verfahren gemäß dem unabhängigen Patentanspruch 1 gelöst.

Erfindungsgemäß wird vorgeschlagen, eine Wand eines Messrohrs in mehreren voneinander beabstandeten Anregungsbereichen anzuregen. Durch eine Überlagerung der erzeugten Teilwellen wird die Gesamtwelle erzeugt, die anschließend zur Anregung der Kompressionsschwingungen im Fluid genutzt wird. Hierbei werden die Anregungsbereiche und die Anregungsfrequenz derart aufeinander abgestimmt, dass eine zu dämpfende Schwingungsmode durch eine destruktive Interferenz zumindest für eine Ausbreitungsrichtung bedämpft wird. Hierdurch kann eine Verbesserung der Modenreinheit der Anregung erreicht werden, indem gezielt eine nicht gewünschte Schwingungsmode bedämpft wird. Ergänzend oder alternativ kann, wie später noch detailliert erläutert werden wird, eine richtungsabhängige Bedämpfung der Schwingungsmode erfolgen, so dass beispielsweise bei Anregung einer im Wesentlichen ebenen Welle eine Abstrahlung der ebenen Welle ausschließlich in eine Richtung oder im Wesentlichen in eine Richtung erfolgen kann.

Die Schwingungswandler können bei einem Messrohr, das mehrere Wände aufweist, an der gleichen Wand oder an unterschiedlichen Wänden des Messrohrs angeordnet sein. Die Anregung der Gesamtwelle erfolgt in diesem Fall insbesondere jeweils in jener Wand, an der der jeweilige Schwingungswandler angeordnet ist. Die Gesamtwelle und/oder die Teilwellen sind insbesondere Lamb-Wellen. Eine Anregung von Lamb-Wellen erfolgt, wenn die Wanddicke mit der Wellenlänge der Transversalwelle im Festkörper vergleichbar ist. Bei Lamb-Wellen handelt es sich um kombinierte Druck- und Scherwellen, womit auch bei einer Anregung an der Außenseite der Wand des Messrohrs eine Auslenkung der Innenfläche der Wand in Richtung des Fluids bzw. von dem Fluid weg resultiert. Durch diese Auslenkungen werden wiederum Kompressionswellen im Fluid ausgelöst. Der gesamte Bereich, innerhalb dem sich die geführte Welle auf der Wand ausbreitet, kann somit als Anregungsfläche für eine Kompressionsschwingung des Fluids dienen.

Umgekehrt kann die Kompressionsschwingung des Fluids in einem ausgedehnten Bereich der Wand wiederum eine geführte Welle anregen, die durch den jeweiligen empfangenden Schwingungswandler erfasst werden kann. In diesem Fall kann durch den gewählten Abstand der Anregungsbereiche und optional durch eine Wahl des Vorzeichens oder der Phase bei der Überlagerung der in verschiedenen Anregungsbereichen erfassten Messsignale eine Wellenlängenselektivität der Messung erreicht werden.

Die Einkopplung der Teilwellen in den verschiedenen Anregungsbereichen kann mithilfe eines für mehrere Anregungsbereiche genutzten Schwingelements erfolgen, wobei dieses nur in den jeweiligen Anregungsbereichen direkt oder indirekt mit dem Messrohr gekoppelt ist. Vorzugsweise werden für die einzelnen Bereiche jedoch separate Schwingelemente genutzt. Das oder die Schwingelemente können direkt mit der Wand des Messrohrs gekoppelt, beispielsweise mit dem Messrohr verklebt, sein, oder es kann zwischen dem Schwingelement und der Wand ein Kopplungselement angeordnet werden.

Das Schwingelement oder die Schwingelemente können über eine viskose Schicht mit dem Messrohr oder einem weiteren Kopplungselement gekoppelt sein. Diese Schicht kann eine Viskosität von weniger als $10^8$ mPas (Millipascalsekunden), insbesondere eine Viskosität zwischen 0,6 mPas und $10^6$ mPas, aufweisen. Beispielsweise kann ein Silikonöl als viskose Kopplungsschicht genutzt werden, dessen Eigenschaften durch Zusätze, beispielsweise eingebrachte Partikel, weiter angepasst werden können. Die Schichtdicke der Kopplungsschicht kann zwischen 10 $\mu$m und 100 $\mu$m betragen.

Gegenüber einer starren Kopplung, beispielsweise einer Verklebung, wird der Vorteil erreicht, dass Verspannungen zwischen dem Schwingelement und der Wand bei einer Temperaturänderung vermieden werden können. Das Messrohr kann beispielsweise aus Metall oder Kunststoff gebildet sein und das Schwingelement kann beispielsweise eine Piezokeramik mit aufgebrachten Elektroden sein. Da diese Materialien unterschiedliche thermische Ausdehnungskoeffizienten aufweisen, ist es vorteilhaft, resultierende unterschiedliche Ausdehnungen durch eine viskose Schicht auszugleichen.

Die viskose Schicht kann elektrisch isolierend sein, um beispielsweise eine Elektrode des Schwingelements gegenüber einem leitenden Messrohr zu isolieren. Alternativ ist es möglich, dass die viskose Schicht elektrisch leitend ist, beispielsweise um eine Kontaktierung der Elektrode über die leitende Schicht zu ermöglichen. Die viskose Schicht kann, insbesondere metallische, Partikel enthalten. Dies kann einerseits dazu dienen, eine Leitfähigkeit der viskosen Schicht herzustellen, andererseits kann durch einen Beisatz von Partikeln die Viskosität der Schicht bedarfsgerecht angepasst werden.

Alternativ zu einer Kopplung über eine viskose Schicht wäre es auch möglich, das Schwingelement oder die Schwingelemente direkt mit der Wand zu koppeln, um eine effizientere Einkopplung der Schwingungen in die Wand zu ermöglichen. Dies ist beispielsweise möglich, wenn im Betrieb die Messeinrichtung keine allzu großen Temperaturschwankungen erwartet werden.

Die Anregungsbereiche können im Wesentlichen rechteckig sein, z. B. um im Wesentlichen ebene Teilwellen anzuregen. Sie können jedoch auch gekrümmt sein, um z. B. eine fokussierte Teilwelle abzustrahlen oder die Teilwelle in einen Öffnungswinkel zu streuen.

Wie bereits erwähnt kann im erfindungsgemäßen Verfahren bei Anregung von ebenen Teilwellen in den Anregungsbereichen eine näherungsweise vollständige Auslöschung der zu dämpfenden Schwingungsmode erreicht werden. Hierzu sind verschiedene Ansätze möglich, die im Folgenden erläutert werden.

Die halbe Wellenlänge oder ein ungeradzahliges Vielfaches der halben Wellenlänge der zu dämpfenden Schwingungsmode bei der gewählten Anregungsfrequenz kann als Abstand zwischen den Mitten zweier Anregungsbereiche gewählt werden, wobei die Anregung in beiden Anregungsbereichen mit gleicher Phasenlage und insbesondere mit gleichem Anregungsverlauf durchgeführt wird. Hieraus resultiert eine destruktive Interferenz zumindest für Ausbreitungsrichtungen der zu bedämpfenden Schwingungsmode, die parallel zu der Verbindungsgerade der Mitten liegen. Werden, insbesondere durch Nutzung von rechteckigen Anregungsbereichen, im Wesentlichen ebene Teilwellen angeregt, so kann für diese die zu bedämpfende Schwingungsmode im Wesentlichen vollständig ausgelöscht werden. Die Wellenlängen der angeregten Schwingungsmoden sind bei einer gegebenen Anregungsfrequenz durch die Dispersionsrelation der Wand des Messrohrs bzw. jenes Wandabschnitts, der die Welle führt, vorgegeben. Das beschriebene Vorgehen kann auch bei einer Anregung in mehr als zwei Anregungsbereichen genutzt werden. Vorzugsweise gilt hierbei für mehrere Paare von Anregungsbereichen, dass der Abstand ihrer Mitten der halben Wellenlänge oder einem ungeradzahligen Vielfachen der halben Wellenlänge der zu bedämpfenden Schwingungsmode entspricht.

Der Anregungsverlauf kann den zeitlichen Verlauf der durch die Anregung verursachten Verformung der Wand bzw. der ausgeübten Kräfte beschreiben. Bei einer Nutzung gleicher Schwingelemente zur Anregung in verschiedenen Anregungsbereichen kann insbesondere das gleiche Anregungssignal für mehrere Schwingelemente genutzt werden, um einen gleichen Anregungsverlauf zu realisieren.

Es ist alternativ möglich, dass die Wellenlänge oder ein Vielfaches der Wellenlänge der zu dämpfenden Schwingungsmode bei der gewählten Anregungsfrequenz als Abstand zwischen den Mitten zweier Anregungsbereiche gewählt wird, wobei die Anregung mit einem Phasenversatz von 180° zwischen den Anregungsbereichen oder mit zueinander entgegengesetztem Anregungsverlauf durchgeführt wird. Auch hieraus resultiert eine destruktive Interferenz für die zu dämpfende Schwingungsmode.

Ein entgegengesetzter Anregungsverlauf kann beispielsweise dadurch realisiert werden, dass jedem der Anregungsbereiche ein jeweiliges Schwingelement zugeordnet ist, wobei einem der Schwingelemente ein Anregungssignal und dem weiteren Schwingelement das invertierte Anregungssignal zugeführt wird oder indem eine Anschlusspolarität der Schwingelemente oder eine Orientierung der Schwingelemente bezüglich der Wand für die verschiedenen Anregungsbereiche umgekehrt wird.

Auch diese Art der Anregungen kann bei einer Nutzung von mehreren Anregungsbereichen verwendet werden, wobei die Anregungsbereiche vorzugsweise linear hintereinander liegen und für aufeinanderfolgende Anregungsbereiche vorzugsweise jeweils ein entgegengesetzter Anregungsverlauf bzw. ein Phasenversatz von 180° genutzt wird.

Die Anregungsfrequenz kann gemäß einer ersten Alternative der Erfindung derart gewählt werden, dass eine angeregte weitere Schwingungsmode der Gesamtwelle die doppelte oder halbe Wellenlänge der zu dämpfenden Schwingungsmode aufweist. Die weitere Schwingungsmode kann durch die Überlagerung der Teilwellen verstärkt werden. Wird die halbe Wellenlänge der zu dämpfenden Schwingungsmode oder ein ungeradzahliges Vielfaches hiervon als Abstand zwischen der Mitten der Anregungsbereiche gewählt und die Anregung erfolgt phasengleich bzw. mit gleichem Anregungsverlauf, so wird eine weitere Schwingungsmode mit der halben Wellenlänge verstärkt. Wird hingegen die Wellenlänge der zu dämpfenden Schwingungsmode oder ein ungeradzahliges Vielfaches hiervon als Abstand zwischen den Mitten der Anregungsbereiche gewählt und die Anregung folgt mit einem Phasenversatz von 180° bzw. mit zueinander entgegengesetzten Anregungsverläufen, so wird eine weitere Schwingungsmode mit der doppelten Wellenlänge verstärkt. Eine Anregungsfrequenz, bei der eine zu dämpfende Schwingungsmode und eine Schwingungsmode mit der doppelten oder halben Wellenlänge bei der gleichen Anregungsfrequenz angeregt werden kann, kann aus der Dispersionsrelation der Wand bzw. des Wandabschnitts des Messrohrs ermittelt werden, in der bzw. in dem die Teilwellen angeregt werden.

Die Anregungsfrequenz kann derart gewählt werden, dass ausschließlich die zu dämpfende und die weitere oder eine weitere Schwingungsmode angeregt werden. Eine entsprechende Frequenz kann mithilfe der Dispersionsrelation der Wand bzw. des Wandabschnitts ermittelt werden. Insbesondere bei relativ niedrigen Anregungsfrequenzen und/oder Wanddicken können beispielsweise für Lamb-Wellen nur zwei Zweige der Dispersionsrelation auftreten, insbesondere die sogenannten Ao- und So-Zweige, die den Grundmoden der asymmetrischen und symmetrischen Lamb-Wellen entsprechen.

Zur Ermittlung der Fluidgröße oder einer weiteren Fluidgröße können weitere Messdaten erfasst werden, wobei die Anregung in zwei der Anregungsbereichen zu Erfassung der Messdaten mit gleicher Phase und gleichem Anregungsverlauf und zur Erfassung der weiteren Messdaten mit einem Phasenversatz von 180° oder entgegengesetztem Anregungsverlauf erfolgt oder umgekehrt. Es ist auch möglich, dass bei der Nutzung von mehr als zwei Anregungsbereichen für Teile der Anregungsbereiche ein entsprechender Phasenversatz oder eine entsprechende Umkehrung des Anregungsverlaufs erfolgt. Ein entgegengesetzter Anregungsverlauf kann beispielsweise dadurch realisiert werden, dass die Beschaltung von Elektroden eines für einen Anregungsbereich genutzten Schwingelements umgekehrt wird oder ein Ansteuersignal invertiert wird.

Durch das beschriebene Vorgehen kann erreicht werden, dass zur Erfassung der Messdaten eine erste Schwingungsmode bedämpft und eine zweite Schwingungsmode verstärkt wird und zur Erfassung der weiteren Messdaten die erste Schwingungsmode verstärkt wird und die zweite Schwingungsmode bedämpft wird. Dies ermöglicht eine modenselektive Anregung für zwei verschiedene Schwingungsmoden. Da wie eingangs erläutert, für verschiedene Schwingungsmoden von Lamb-Wellen unterschiedliche Ausbreitungspfade für die angeregten Kompressionsschwingungen im Fluid resultieren, kann somit eine Messung der Fluidgröße bezüglich unterschiedlicher Ausbreitungspfade mit geringem technischen Aufwand realisiert werden.

Die erläuterte Abstimmung des Abstands zwischen den Mitten der Anregungsbereiche und der Anregungsfrequenz kann ergänzend oder alternativ dazu genutzt werden, eine Ausbreitungsrichtung der Gesamtwelle zu beeinflussen bzw. die Ausbreitung der Gesamtwelle in eine Richtung zu bedämpfen. Hierzu können, insbesondere bei einer Anregung von im Wesentlichen ebenen Wellen, der Abstand der Mitten und die Phasenlage der Anregungen so gewählt werden, dass eine Schwingungsmode der Teilwellen in einer Richtung im Wesentlichen ausgelöscht und in die andere Richtung verstärkt wird.

Ein Viertel der Wellenlänge oder ein ungeradzahliges Vielfaches eines Viertels der Wellenlänge der zu dämpfenden Schwingungsmode bei der gewählten Anregungsfrequenz kann gemäß einer zweiten Alternative der Erfindung als der Abstand zwischen zwei Anregungsbereichen gewählt werden, wobei die Anregung mit einem Phasenversatz von 90° zwischen den Anregungsbereichen durchgeführt wird. Bei einer Anregung einer ebenen Welle werden üblicherweise zwei ebene Wellen angeregt, die in entgegengesetzte Ausbreitungsrichtungen laufen. Durch die vorangehend beschriebene Überlagerung resultiert eine konstruktive Interferenz für eine dieser Ausbreitungsrichtungen und eine destruktive Interferenz für die andere.

Dies wird im Folgenden an einem Beispiel gezeigt, bei dem der Abstand ein Viertel der Wellenlänge der zu dämpfenden Schwingungsmode ist und ein Phasenversatz von +90° verwendet wird. In einem ersten Anregungsbereich wird folgende geführte Welle angeregt:

$$y_1 = \sin(\frac{2\pi}{\lambda}x - \omega t) + \sin(-\frac{2\pi}{\lambda}x - \omega t)$$

Hierbei ist λ die Wellenlänge, x der Abstand vom Anregungsort, t die Zeit und ω das Produkt aus 2π und der Frequenz der geführten Welle. Aufgrund des Phasenversatzes und dem Abstand zwischen den Bereichen wird im zweiten Bereich die folgende in beide Richtungen laufende geführte Welle angeregt:

$$y_2 = \sin(\frac{2\pi}{\lambda}(x + \lambda/4) - \omega t - \pi/2) + \sin(-\frac{2\pi}{\lambda}(x + \lambda/4) - \omega t - \pi/2)$$

Eine Überlagerung, also eine Summe der beiden Wellen, kann durch trigonometrisches Umformen berechnet werden, wobei sich das folgende Ergebnis ergibt:

$$y_1 + y_2 = 2 \cdot \sin(\frac{2\pi}{\lambda}x - \omega t)$$

Eine Überlagerung der beiden geführten Wellen resultiert somit in einer geführten Welle, die sich ausschließlich in eine Ausbreitungsrichtung ausbreitet, da für diese Ausbreitungsrichtung eine konstruktive Interferenz resultiert und für die entgegengesetzte Ausbreitungsrichtung eine destruktive Interferenz.

Wie leicht an der obigen Rechnung zu erkennen ist, ändert die Addition einer kompletten Wellenlänge der zu dämpfenden Schwingungsmode nichts an dem Ergebnis. Eine Addition einer halben Wellenlänge, also Abstände von beispielsweise dem 0,75-fachen, 1,75-fachen oder 2,75-fachen des Abstandes oder eine Phasenverschiebung von -90° würden zu einer Umkehrung der verbleibenden Ausbreitungsrichtung führen. Das beschriebene Vorgehen ermöglicht es somit auch durch eine Wahl eines Phasenversatzes zwischen den Anregungsbereichen, beispielsweise durch ein separates Bereitstellen von Anregungssignalen für die Schwingelemente, die den einzelnen Anbringungsbereichen zugeordnet sind, wahlfrei eine von zwei möglichen Ausbreitungsrichtungen für die Gesamtwelle vorzugeben.

Die vorangehend diskutierten Ansätze zur Unterdrückung einer Schwingungsmode und zur Unterdrückung einer Ausbreitungsrichtung können kombiniert werden. Hierzu kann die Anregungsfrequenz derart gewählt sein, dass die zu dämpfende Schwingungsmode durch eine destruktive Interferenz der Teilwellen in der Ausbreitungsrichtung zumindest teilweise ausgelöscht wird und eine weitere zu dämpfende Schwingungsmode in einer zur Ausbreitungsrichtung entgegengesetzten weiteren Ausbreitungsrichtung durch eine destruktive Interferenz der Teilwellen in der weiteren Ausbreitungsrichtung zumindest teilweise ausgelöscht wird. Insbesondere können sich die Teilwellen derart überlagern, dass die zu dämpfende Schwingungsmode in der weiteren Ausbreitungsrichtung durch eine konstruktive Interferenz verstärkt wird und die weitere zu dämpfende Schwingungsmode in der Ausbreitungsrichtung verstärkt wird. Insbesondere kann die zu dämpfende Schwingungsmode im Wesentlichen ausschließlich in die weitere Ausbreitungsrichtung und die weitere zu dämpfende Schwingungsmode im Wesentlichen ausschließlich in die Ausbreitungsrichtung abgestrahlt werden. Es werden somit unterschiedliche Schwingungsmoden in unterschiedliche Ausbreitungsrichtungen abgestrahlt.

Dies kann erreicht werden, indem die Anregungsfrequenz derart gewählt wird, dass das Verhältnis der Wellenlänge $\lambda_0$ der zu dämpfenden Schwingungsmode zu der Wellenlänge $\lambda_1$ der weiteren zu dämpfenden Schwingungsmode $\frac{\lambda_0}{\lambda_1} = \frac{2(2p+1) + (-1)^m}{2m+1}$ ist, wobei m und p jeweils Null oder eine positive ganze Zahl sind. m gibt, wie im Folgenden erläutert, den Abstand zwischen den Mitten der Anregungsbereiche und das Vorzeichen des Phasenunterschieds vor. Diese Beziehung kann wie folgt hergeleitet werden:

Soll eine Schwingungsmode mit der Wellenlänge $\lambda_0$ gerichtet abgestrahlt werden, so kann, wie obig erläutert, der Abstand $\Delta x$ ein Viertel der Wellenlänge oder ein ungeradzahliges Vielfaches eines Viertels der Wellenlänge der zu dämpfenden Schwingungsmode sein:

$$\Delta x = (2m+1) \cdot \frac{\lambda_0}{4},$$

wobei m Null oder eine ganze Zahl ist. Der Phasenversatz Φ kann dann folgendermaßen gewählt werden:

$$\phi = (-1)^m \frac{\pi}{2}.$$

Soll die weitere zu dämpfende Schwingungsmode in jener Richtung, in der die zu dämpfende Schwingungsmode verstärkt wird, ausgelöscht werden, so muss die weitere zu dämpfende Schwingungsmode destruktiv interferieren, also einen Phasenversatz von 180° bzw. von $\pi$ oder ein ganzzahliges ungerades Vielfaches hiervon aufweisen:

$$(2p+1)\cdot\pi = 2\pi\frac{\Delta x}{\lambda_1} - \phi\,,$$

wobei p gleich Null oder eine ganze Zahl ist. Durch Einsetzen von $\Delta x$ und $\Phi$ und Umformen resultiert die obige Bedingung für das Verhältnis der Wellenlängen. Ist die Dispersionsrelation der Wand bekannt, so kann gezielt eine Anregungsfrequenz gewählt werden, für die diese Bedingung erfüllt ist. Vorzugsweise wird die Anregungsfrequenz hierbei so gewählt, dass genau zwei Schwingungsmoden von Lamb-Wellen anregbar sind, deren Wellenlängen das beschriebene Verhältnis aufweisen. Vorzugsweise sind p und/oder m jeweils kleiner oder gleich fünf oder kleiner oder gleich drei.

Der erste und/oder der zweite Schwingungswandler können jeweils mehrere Schwingelemente umfassen, durch die jeweils eine der Teilwellen angeregt wird. Für die Schwingelemente kann durch eine Steuereinrichtung ein gemeinsames Steuersignal bereitgestellt werden, soweit eine phasengleiche Anregung bzw. ein gleicher Anregungsverlauf gewünscht ist. Eine Phasenverschiebung von 180° bzw. eine Umkehrung des Anregungsverlaufs kann beispielsweise dadurch erreicht werden, dass ein Ansteuersignal invertiert wird, ein entsprechendes Schwingelement umgekehrt an der Wand angeordnet wird oder eine Polarität der Verbindung des Schwingelements mit einer Steuereinrichtung vertauscht wird.

Die Schwingelemente können piezoelektrische Schwingelemente sein. Sie können an der Wand oder an einem zwischen der Wand und dem Schwingelement angeordneten Kopplungselement angeordnet sein. Vorzugsweise werden relativ einfache Elektrodenstrukturen genutzt. Beispielsweise können nur zwei gegenüberliegende Elektroden vorgesehen sein, wobei eine dieser Elektroden zur leichteren Kontaktierung auch abschnittsweise um das Schwingelement herum geführt sein kann und/oder als Blechelektrode von dem Schwingelement abstehen kann. Vorzugsweise wird eine Dickenschwingung des Schwingelements senkrecht zur Wand des Messrohrs angeregt.

Die Abmessungen des jeweiligen Schwingelements können so gewählt werden, dass die gewählte Anregungsfrequenz eine Resonanzfrequenz des Schwingelements, insbesondere eine Resonanzfrequenz einer Dickenschwingung, ist. Die Schwingelemente können sich im Wesentlichen über die Breite des Messrohrs erstrecken. Es ist jedoch auch möglich, in einem Anregungsbereich mehrere, insbesondere gemeinsam angesteuerte, Schwingelemente vorzusehen. Beispielsweise kann eine linienartige gerade oder gekrümmte Anordnung von beispielsweise kreisförmigen Schwingelementen genutzt werden, um in dem jeweiligen Anregungsbereich im Wesentlichen eine ebene Welle anzuregen. Die Ausdehnung der Schwingelemente in Längsrichtung des Rohres bzw. in Richtung einer Verbindungsgeraden zwischen der Mitten der Anregungsbereiche kann beispielsweise gleich oder kleiner als die halbe Wellenlänge der zu bedämpfenden Schwingungsmode sein.

Es ist auch möglich, sehr dünne Schwingelemente zu verwenden. In diesem Fall können die Schwingelemente keine Eigenmode im Bereich der Anregungsfrequenz aufweisen, womit eine breitbandige Anregung ermöglicht wird. Es ist auch möglich sogenannte "piezoelectric wafer active sensors" als Schwingelemente zu nutzen.

Durch das erfindungsgemäße Verfahren können Messungen an einer durch das Messrohr strömenden Fluidströmung, jedoch auch an einem in dem Messrohr stehenden Fluid durchgeführt werden. Die Nutzung eines Schwingungstransports zur Erfassung von Fluideigenschaften ist prinzipiell im Stand der Technik bekannt. Beispielsweise werden in Ultraschallzählern häufig Laufzeitunterschiede einer Laufzeit einer Schwingung zwischen einem ersten und einem zweiten Ultraschallwandler und umgekehrt erfasst und hieraus kann eine Flussgeschwindigkeit bestimmt werden. Es können jedoch auch andere Messdaten ausgewertet werden, um Fluideigenschaften zu bestimmen. Beispielsweise kann eine Signalamplitude am empfangenden Schwingungswandler ausgewertet werden, um eine Dämpfung der Schwingung beim Transport durch das Fluid zu erfassen. Amplituden können auch frequenzabhängig ausgewertet werden und es können absolute oder relative Amplituden bestimmter Spektralbereiche ausgewertet werden, um ein spektral unterschiedliches Dämpfungsverhalten im Fluid zu erfassen. Auch Phasenlagen unterschiedlicher Frequenzbänder können ausgewertet werden, um beispielsweise Informationen über das Dispersionsverhalten der Messstrecke zu gewinnen. Vorzugsweise können Informationen über das Dispersionsverhalten der Druckwelle im Fluid und/oder über das Dispersionsverhalten der Lamb-Welle in der Wand ermittelt werden. Alternativ oder ergänzend können auch Veränderungen der spektralen Zusammensetzung bzw. der Amplitude über die Zeit, beispielsweise innerhalb eines Messpulses, ausgewertet werden.

Durch Auswertung dieser Größen können als Fluidgrößen beispielsweise eine Durchflussgeschwindigkeit und/oder ein Durchflussvolumen und/oder eine Dichte, Temperatur und/oder Viskosität des Fluids ermittelt werden. Ergänzend oder alternativ können beispielsweise eine Schallgeschwindigkeit im Fluid und/oder eine Zusammensetzung des Fluids, beispielsweise ein Mischungsverhältnis unterschiedlicher Komponenten, ermittelt werden. Verschiedene Ansätze zur Gewinnung dieser Fluidgrößen aus den vorangehend erläuterten Messgrößen sind im Stand der Technik bekannt und sollen daher nicht detailliert dargestellt werden. Beispielsweise können Zusammenhänge zwischen einer oder mehreren Messgrößen und der Fluidgröße empirisch ermittelt werden und es kann beispielsweise eine Look-Up-Tabelle oder eine entsprechende Formel genutzt werden, um die Fluidgröße zu ermitteln.

Neben dem erfindungsgemäßen Verfahren betrifft die Erfindung eine Messeinrichtung zur Ermittlung einer ein Fluid und/oder eine Fluidströmung des Fluids betreffenden Fluidgröße, welche durch den Patentanspruch 9 spezifiziert ist und welche ausgeführt ist zur Durchführung des erfindungsgemäßen Verfahrens und mit den zu dem erfindungsgemäßen Verfahren offenbarten Merkmalen weitergebildet werden kann. Ebenso kann das erfindungsgemäße Verfahren mit Merkmalen weitergebildet werden, die zur Messeinrichtung erläutert werden. Die Anregungsfrequenz kann fest, beispielsweise durch eine entsprechende Programmierung oder einen entsprechenden Aufbau der Steuereinrichtung, vorgegeben sein.

Der erste und/oder der zweite Schwingungswandler können jeweils mehrere Schwingelemente umfassen, wobei in jedem der Anregungsbereiche wenigstens ein jeweiliges Schwingelement direkt oder über wenigstens ein Kopplungselement mit dem Messrohr gekoppelt ist. Als Kopplungselement kann beispielsweise eine viskose Schicht und/oder ein Element, das das Schwingelement trägt, genutzt werden. Das Schwingelement kann beispielsweise ein piezoelektrisches Schwingelement, ein elektromagnetischer Schallwandler, ein kapazitiver mikromechanischer Ultraschallwandler oder ein elektroaktives Polymer sein.

Die Steuereinrichtung kann ein gemeinsames Ansteuersignal für die Schwingelemente des jeweiligen Schwingwandlers bereitstellen, wobei das Ansteuersignal wenigstens einem Schwingelement direkt und wenigstens einem Schwingelement mit einer umgekehrten Polarität zugeführt wird, wodurch ein zueinander entgegengesetzter Anregungsverlauf der Schwingelemente resultiert, oder wobei das Ansteuersignal allen Schwingelementen direkt zugeführt wird. Eine derartige gemeinsame Bereitstellung eines Ansteuersignals ist technisch besonders einfach zu realisieren. Ein Umkehren der Polarität kann beispielsweise durch einen umgekehrten Anschluss von Elektroden der Schwingelemente oder durch eine Inverterschaltung erfolgen. Es ist auch möglich, dass die Messeinrichtung derart ausgebildet ist, dass für einige der Schwingelemente zwischen einer direkten Zuführung des Ansteuersignals und einer Zuführung mit umgekehrter Polarität umgeschaltet werden kann, beispielsweise um zwischen verschiedenen zu dämpfenden bzw. zu verstärkenden Schwingungsmoden umzuschalten, wie dies zum erfindungsgemäßen Verfahren erläutert wurde.

Alternativ kann die Steuereinrichtung dazu eingerichtet sein, für wenigstens zwei der Schwingelemente Ansteuersignale bereitzustellen, die zueinander phasenverschoben sind oder einen zueinander entgegengesetzten Signalverlauf aufweisen. Beispielsweise können die Ansteuersignale über verschiedene Kanäle eines oder mehrerer Digital-Analog-Wandler bereitgestellt werden.

Weitere Vorteile und Einzelheiten der Erfindung ergeben sich aus den folgenden Ausführungsbeispielen und den zugehörigen Zeichnungen. Hierbei zeigen schematisch:

Fig. 1 - 3    verschiedene Ansichten eines Ausführungsbeispiels einer erfindungsgemäßen Messeinrichtung, durch die ein Ausführungsbeispiel des erfindungsgemäßen Verfahrens ausführbar ist, und

Fig. 4    eine Detailansicht eines weiteren Ausführungsbeispiels einer erfindungsgemäßen Messeinrichtung, durch die ein weiteres Ausführungsbeispiel des erfindungsgemäßen Verfahrens durchführbar ist.

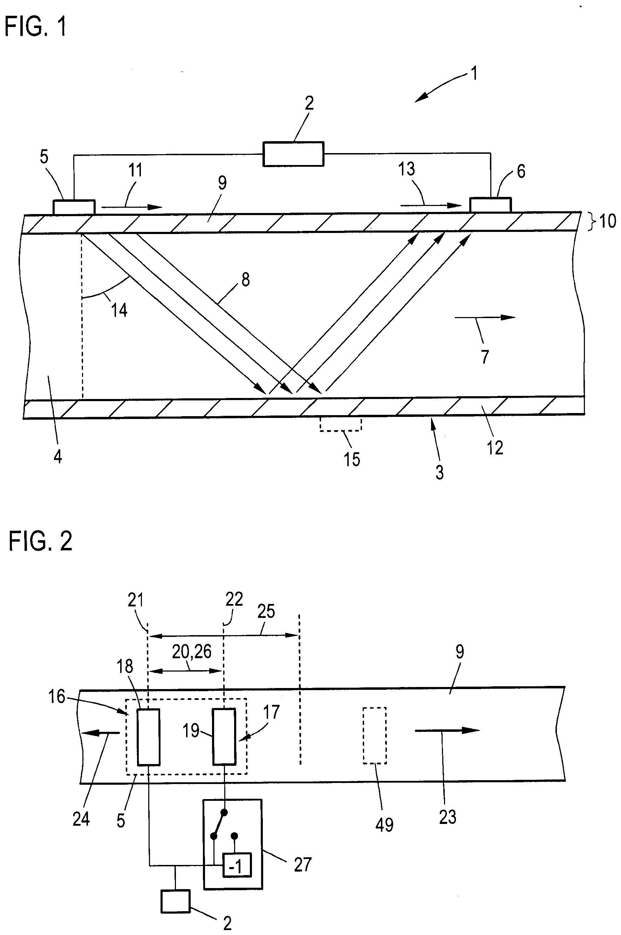

Fig. 1 zeigt eine Messeinrichtung 1 zur Ermittlung einer ein Fluid und/oder eine Fluidströmung betreffenden Fluidgröße. Das Fluid wird hierbei in eine durch den Pfeil 7 gezeigte Richtung durch einen Innenraum 4 eines Messrohrs 3 geführt. Um die Fluidgröße, insbesondere ein Durchflussvolumen, zu ermitteln, kann durch die Steuereinrichtung 2 eine Laufzeitdifferenz zwischen den Laufzeiten von einem ersten Schwingungswandler 5 zu einem zweiten Schwingungswandler 6 und umgekehrt ermittelt werden. Hierbei wird ausgenutzt, dass diese Laufzeit von einer Geschwindigkeitskomponente des Fluids parallel zu einer Ausbreitungsrichtung eines Ultraschallstrahls 8 durch das Fluid abhängt. Aus dieser Laufzeit kann somit eine über den Pfad des jeweiligen Ultraschallstrahls 8 gemittelte Flussgeschwindigkeit in Richtung des jeweiligen Ultraschallstrahls 8 und somit näherungsweise eine gemittelte Strömungsgeschwindigkeit in dem von dem Ultraschallstrahl 8 durchquerten Volumen ermittelt werden.

Um einerseits eine Anordnung der Schwingungswandler 5, 6 außerhalb des Messrohrs 3 zu ermöglichen und andererseits eine Empfindlichkeit bezüglich unterschiedlicher Strömungsgeschwindigkeiten an unterschiedlichen Positionen des Strömungsprofils zu reduzieren, wird durch den ersten Schwingungswandler 5 nicht direkt ein Ultraschallstrahl 8, also eine Druckwelle, in dem Fluid induziert. Stattdessen wird durch den Schwingungswandler 5 eine geführte Welle in der Seitenwand 9 des Messrohrs 3 angeregt. Die Anregung erfolgt mit einer Frequenz, die derart gewählt ist, dass eine Lamb-Welle in der Seitenwand 9 angeregt wird. Solche Wellen können angeregt werden, wenn die Dicke 10 der Seitenwand 9 vergleichbar mit der Wellenlänge der Transversalwelle im Festkörper ist, welche sich aus dem Verhältnis der Schallgeschwindigkeit der Transversalwelle im Festkörper und der angeregten Frequenz ergibt.

Die durch den Schwingungswandler 5 in der Seitenwand 9 angeregte geführte Welle ist schematisch durch den Pfeil 11 dargestellt. Durch die geführte Welle werden Kompressionsschwingungen des Fluids angeregt, die im gesamten Ausbreitungspfad der geführten Welle in das Fluid abgestrahlt werden. Dies ist schematisch durch die in Strömungsrichtung zueinander versetzten Ultraschallstrahlen 8 dargestellt. Die abgestrahlten Ultraschallstrahlen 8 werden an der gegenüberliegenden Seitenwand 12 reflektiert und über das Fluid zurück zu der Seitenwand 9 geführt. Dort regen die auftreffenden Ultraschallstrahlen 8 erneut eine geführte Welle in der Seitenwand 9 an, die schematisch durch den Pfeil 13 dargestellt ist und die durch den Schwingungswandler 6 erfasst werden kann, um die Laufzeit zu bestimmen. Alternativ oder ergänzend ist es möglich, die abgestrahlten Ultraschallwellen über einen Schwingungswandler 15 zu erfassen, der an der Seitenwand 12 angeordnet ist. Im gezeigten Beispiel werden die Ultraschallstrahlen 8 auf ihrem Pfad zum Schwingungswandler 6, 15 nicht bzw. nur einmal an den Seitenwänden 9, 12 reflektiert. Es wäre selbstverständlich möglich, eine längere Messstrecke zu nutzen, wobei die Ultraschallstrahlen 8 mehrfach an den Seitenwänden 9, 12 reflektiert werden.

Bei dem geschilderten Vorgehen kann es problematisch sein, dass die Dispersionsrelation für Lamb-Wellen in der Seitenwand 9 mehrere Zweige aufweist. Bei einer Anregung mit einer bestimmten durch die Steuereinrichtung 2 vorgegebenen Frequenz wäre es somit möglich, dass unterschiedliche Schwingungsmoden für die Lamb-Welle angeregt werden, die unterschiedliche Phasengeschwindigkeiten aufweisen. Dies führt dazu, dass die Kompressionswellen in Abhängigkeit dieser Phasengeschwindigkeiten unter unterschiedlichen Rayleigh-Winkeln 14 abgestrahlt werden. Hieraus resultieren verschiedene Pfade für die Führung der Ultraschallwelle von dem Schwingungswandler 5 zu dem Schwingungswandler 6 und umgekehrt, die typischerweise unterschiedliche Laufzeiten aufweisen. Die empfangenen Signale für diese verschiedenen Ausbreitungspfade müssten somit durch eine aufwändige Signalverarbeitung durch die Steuereinrichtung 2 separiert werden, um die Fluidgröße bestimmen zu können. Dies erfordert einerseits eine aufwändige Steuereinrichtung und ist andererseits nicht in allen Anwendungsfällen robust möglich. Daher soll in dem Schwingungswandler 5 eine möglichst modenreine Anregung von geführten Wellen erfolgen.

Fig. 2 zeigt einen Aufbau des Schwingungswandlers 5, durch den eine modenreine Anregung einer in der Wand 9 geführten Gesamtwelle ermöglicht wird. Der Schwingungswandler 5 umfasst zwei voneinander beanstandete Anregungsbereiche 16, 17, in denen durch ein jeweiliges Schwingelement 18, 19 jeweils in der Wand 9 geführte Teilwellen angeregt werden, die sich zu der Gesamtwelle überlagern. Als Teilwellen werden Lamb-Wellen angeregt. Da die Schwingelemente 18, 19 im Wesentlichen rechteckförmig sind und im gesamten Anregungsbereich 16, 17 mit der Wand gekoppelt sind, werden als Teilwellen im Wesentlichen ebene Wellen angeregt, die durch die Wand 9 in die Ausbreitungsrichtungen 23, 24 geführt werden.

Um eine modenreine Anregung zu realisieren, sind der Abstand 20 zwischen den Mitten 21, 22 der Anregungsbereiche 16, 17 und die durch die Steuereinrichtung 2 vorgegebene Anregungsfrequenz derart gewählt, dass eine zu dämpfende Schwingungsmode der Teilwellen durch eine destruktive Interferenz in die Ausbreitungsrichtungen 23, 24 im Wesentlichen ausgelöscht wird. Um dies zu erreichen, wird die Anregungsfrequenz so gewählt, dass die Wellenlänge 25 der zu dämpfenden Schwingungsmode gemäß der Dispersionsrelation der Wand 9 bei der gewählten Anregungsfrequenz doppelt so lang ist wie der Abstand zwischen den Mitten 21, 22 der Anregungsbereiche 16, 17. Da die Schwingelemente 18, 19 im Wesentlichen gleich aufgebaut sind und durch die Steuereinrichtung 2 mit einem gemeinsamen Ansteuersignal angesteuert werden, resultiert eine destruktive Interferenz der Teilwellen bezüglich der zu dämpfenden Schwingungsmode, womit diese im Wesentlichen vollständig unterdrückt wird.

Wird nun die Anregungsfrequenz derart gewählt, dass ausschließlich die zu dämpfende und eine einzige weitere Schwingungsmode angeregt werden, was bei einer bekannten Dispersionsrelation der Wand 9 problemlos möglich ist, so kann eine im Wesentlichen modenreine Anregung der weiteren Schwingungsmode realisiert werden.

Im gezeigten Ausführungsbeispiel ist die Anregungsfrequenz so gewählt, dass die Wellenlänge 26 der weiteren angeregten Schwingungsmode genau halb so lang ist wie die Wellenlänge 25 der zu dämpfenden Schwingungsmode. Hierdurch wird der Vorteil erreicht, dass die in den Anregungsbereichen 16, 17 angeregten Teilwellen bezüglich der weiteren Schwingungsmode konstruktiv interferieren, wodurch diese Schwingungsmode mit einer größeren Amplitude bereitgestellt wird.

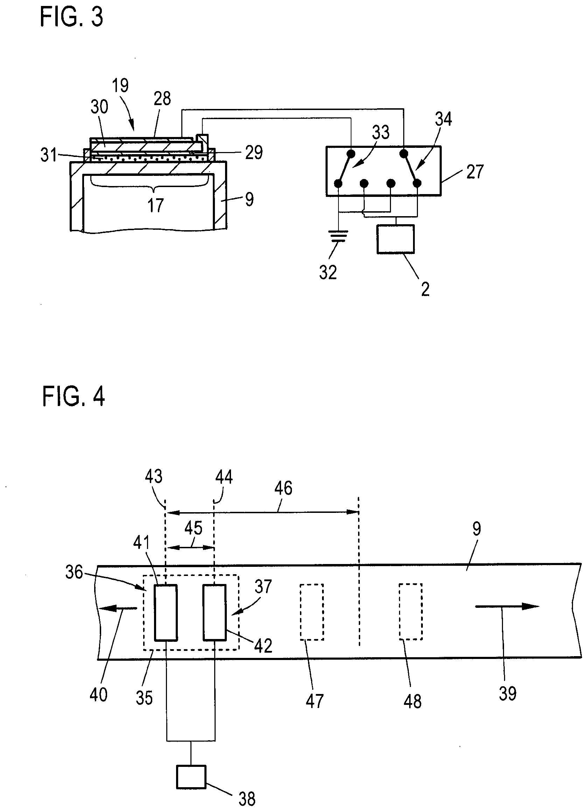

Das durch die Steuereinrichtung 2 bereitgestellte Steuersignal kann durch eine Inverterschaltung 27 auch invertiert werden, bevor es dem Schwingelement 19 zugeführt wird. Eine Möglichkeit hierfür ist in Fig. 3 dargestellt. Das Schwingelement 19 besteht aus einem piezoelektrischen Block 30, beispielsweise einem Block 30 aus Piezokeramik oder aus einer Piezokompositkeramik, an dem zwei flächige Elektroden 28, 29 angeordnet sind. Das Schwingelement 19 liegt mit der Elektrode 29 auf einem Kopplungselement 31, nämlich einer viskosen Kopplungsschicht, auf, die das Schwingelement 19 im Anregungsbereich 17 mit der Wand 9 koppelt. Die viskose Schicht kann beispielsweise Metallpartikel aufweisen, um ihre Viskosität bedarfsgerecht anzupassen. Sie ist vorzugsweise nicht leitend, um die Elektrode 29 von der Wand 9 zu isolieren, falls die Wand 9 leitfähig ist. Statt einer Ankopplung über das Kopplungselement 31 könnte das Schwingelement 19 auch unmittelbar mit der Wand 9 gekoppelt, beispielsweise verklebt, sein. Die Elektrode 29 ist primär auf der messrohrzugewandten Seite des Schwingelements 19 angeordnet, umfasst den Block 30 jedoch teilweise, um eine leichtere Kontaktierung zu ermöglichen.

Im gezeigten Zustand der Inverterschaltung 27 ist die Elektrode 29 mit einem Referenzpotential 32 gekoppelt und der Elektrode 28 wird ein Ansteuersignal der Steuereinrichtung 2 zugeführt. Durch Umschalten der Schalter 33, 34 kann die Zuordnung der Signale zu den Elektroden 28, 29 umgekehrt werden, womit aus dem gleichen Ansteuersignal ein umgekehrter Anregungsverlauf im Anregungsbereich 17 resultiert.

Ein Schalten der Inverterschaltung 27 führt somit dazu, dass in den Anregungsbereichen 16, 17 eine Anregung mit zueinander inversem Anregungsverlauf erfolgt, also dass bei einer Anregung einer harmonischen Schwingung eine Anregung mit einer Phasenverschiebung von 180° erfolgt. Dies führt dazu, dass die weitere Schwingungsmode mit der Wellenlänge 26 nun gedämpft wird, während die zuvor gedämpfte Schwingungsmode mit der Wellenlänge 25 verstärkt wird. Handelt es sich bei diesen beiden Schwingungsmoden, wie vorangehend erläutert, um die einzigen beiden anregbaren Schwingungsmoden, kann somit in der Messeinrichtung 1 eine modenselektive Schwingungsanregung erfolgen, wobei zwischen zwei Schwingungsmoden umgeschaltet werden kann. Dies ist insbesondere vorteilhaft, da der Rayleigh-Winkel 14, mit dem die Kompressionswellen in das Fluid abgestrahlt werden, und somit der Ausbreitungsweg der Kompressionswellen von der Phasengeschwindigkeit und somit von der Wellenlänge der angeregten Schwingungsmode abhängt. Somit kann durch das beschrieben Vorgehen zwischen zwei definierten Ausbreitungspfaden für die Kompressionswellen umgeschaltet werden, womit die Bestimmung der Fluidgröße verbessert bzw. eine Bestimmung einiger Fluidgrößen erst ermöglicht werden kann.

Der in Fig. 3 dargestellte eckige Querschnitt des Messrohrs 3 ist rein beispielhaft. Alternativ könnte beispielsweise auch ein rundes oder ein im Wesentlichen rundes und nur an den Anordnungsflächen der Schwingungswandler 5, 6, 15 abgeflachtes Messrohr verwendet werden.

Fig. 2 zeigt ergänzend ein weiteres Beispiel für einen Anregungsbereich 49, der statt dem Anregungsbereich 17 oder ergänzend hierzu genutzt werden könnte. Die Mitte des Anregungsbereichs 49 ist um das 1,5-fache der Wellenlänge 25 der zu dämpfenden Schwingungsmode von der Mitte 21 des Anregungsbereichs 16 entfernt, womit auch durch eine Anregung im Anregungsbereich 49 mit dem gleichen Anregungsverlauf wie im Anregungsbereich 16 eine destruktive Interferenz für die zu dämpfende Schwingungsmode resultiert.

Ergänzend oder alternativ zur vorangehend beschriebenen modenselektiven Anregung kann die Anregung auch so erfolgen, dass eine von mehreren Ausbreitungsrichtungen für die Gesamtwelle vorgegeben werden kann. Ein Beispiel hierfür ist in Fig. 4 dargestellt. Der Aufbau des Schwingungswandlers 35 entspricht weitgehend dem Aufbau des vorangehend erläuterten Schwingungswandlers 5, abgesehen davon, dass der Abstand 45 zwischen den Mitten 43, 44 der Anregungsbereiche 36, 37 auf eine andere Weise gewählt wird als vorangehend erläutert und dass von der Steuerungseinrichtung 38 separate Ansteuerungssignale für die in den Anregungsbereichen 36, 37 angeordneten Schwingelemente 41, 42 bereitgestellt werden, die zueinander um +90° oder -90° phasenverschoben sind. Der Abstand 45 ist hierbei so gewählt, dass er ein Viertel der Wellenlänge 46 jener Schwingungsmode ist, für die für eine der Ausbreitungsrichtungen 39, 40 unterdrückt werden soll. Die Wahl dieses Abstands führt gemeinsam mit der Phasenverschiebung um 90° dazu, dass je nach Vorzeichen der Phasenverschiebung die zu dämpfende Schwingungsmode ausschließlich in die Ausbreitungsrichtung 39 oder ausschließlich in die Ausbreitungsrichtung 40 abgestrahlt wird und eine Abstrahlung in die andere Ausbreitungsrichtung durch eine destruktive Interferenz unterdrückt wird.

Dieser Effekt könnte auch erreicht werden, wenn ergänzend oder alternativ zu der Anregung in dem Anregungsbereich 37 eine Anregung in dem Anregungsbereich 47, dessen Mitte um dreiviertel der Wellenlänge 46 von der Mitte 43 des Anregungsbereichs 36 beabstandet ist, oder in dem Anregungsbereich 48, dessen Mitte um fünf Viertel der Wellenlänge 46 von der Mitte 43 des Anregungsbereichs 36 beabstandet ist, erfolgt.

Erfolgt die Anregung in dem Anregungsbereich 47 statt in dem Anregungsbereich 37 mit dem gleichen Phasenversatz, so wechselt die verbleibende Ausbreitungsrichtung der Schwingungsmode. Erfolgte beispielsweise vorher ausschließlich eine Abstrahlung der Schwingungsmode in die Ausbreitungsrichtung 39, so erfolgt diese bei einem Wechsel des Anregungsbereichs von dem Anregungsbereich 37 zu dem Anregungsbereich 47 in die Ausbreitungsrichtung 40. Die Ausbreitungsrichtung kann erneut dadurch umgekehrt werden, dass von einer Phasenverschiebung von +90° zu einer Phasenverschiebung von -90° gewechselt wird oder umgekehrt.

Die vorangehend diskutierten Ansätze zur Unterdrückung einer Schwingungsmode und zur Unterdrückung einer Ausbreitungsrichtung können kombiniert werden. Hierzu kann die Anregungsfrequenz derart gewählt werden, dass eine erste Schwingungsmode im Wesentlichen ausschließlich in eine erste Ausbreitungsrichtung und eine zweite Schwingungsmode im Wesentlichen ausschließlich in eine entgegengesetzte zweite Ausbreitungsrichtung abgestrahlt werden. Es werden somit unterschiedliche Schwingungsmoden in unterschiedliche Ausbreitungsrichtungen abgestrahlt.

Dies kann erreicht werden, indem die Anregungsfrequenz derart gewählt wird, dass das Verhältnis der Wellenlänge $\lambda_0$ der ersten Schwingungsmode zu der Wellenlänge $\lambda_1$ der zweiten Schwingungsmode

$$\frac{\lambda_0}{\lambda_1} = \frac{2(2p+1)+(-1)^m}{2m+1}$$ ist, wobei m und p jeweils Null oder eine positive ganze Zahl sind. Der Abstand der 45 der Anregungsbereiche ist das 2m + 1 fache des Viertels der Wellenlänge. In dem in Fig. 4 gezeigten Fall ist m somit gleich Null. Würden die gestrichelt gezeigten Anregungsbereiche 47 bzw. 48 genutzt, so wäre m gleich eins bzw. gleich zwei. P kann frei gewählt werden.

Bezugszeichenliste

| | |
|---|---|
| 1 | Messeinrichtung |
| 2 | Steuereinrichtung |
| 3 | Messrohr |
| 4 | Innenraum |
| 5 | Schwingungswandler |
| 6 | Schwingungswandler |
| 7 | Pfeil |
| 8 | Ultraschallstrahl |
| 9 | Wand |
| 10 | Dicke |
| 11 | Pfeil |
| 12 | Wand |
| 13 | Pfeil |
| 14 | Rayleigh-Winkel |
| 15 | Schwingungswandler |
| 16 | Anregungsbereich |
| 17 | Anregungsbereich |
| 18 | Schwingelement |
| 19 | Schwingelement |
| 20 | Abstand |
| 21 | Mitte |
| 22 | Mitte |
| 23 | Ausbreitungsrichtung |
| 24 | Ausbreitungsrichtung |
| 25 | Wellenlänge |
| 26 | Wellenlänge |
| 27 | Inverterschaltung |
| 28 | Elektrode |
| 29 | Elektrode |
| 30 | Block |
| 31 | Kopplungselement |
| 32 | Referenzpotential |
| 33 | Schalter |
| 34 | Schalter |
| 35 | Schwingungswandler |
| 36 | Anregungsbereich |
| 37 | Anregungsbereich |
| 38 | Steuereinrichtung |
| 39 | Ausbreitungsrichtung |
| 40 | Ausbreitungsrichtung |
| 41 | Schwingelement |
| 42 | Schwingelement |
| 43 | Mitte |
| 44 | Mitte |
| 45 | Abstand |
| 46 | Wellenlänge |
| 47 | Anregungsbereich |
| 48 | Anregungsbereich |
| 49 | Anregungsbereich |

**Patentansprüche**

1.  Verfahren zur Ermittlung einer ein Fluid und/oder eine Fluidströmung des Fluids betreffenden Fluidgröße mit einer Messeinrichtung (1), die ein das Fluid aufnehmendes und/oder von dem Fluid durchströmbares Messrohr (3) und einen ersten und einen zweiten voneinander beabstandet an dem Messrohr (3) angeordneten Schwingungswandler (5, 6, 15, 35) umfasst, umfassend die Schritte:

- Anregen einer jeweiligen durch eine Wand (9) des Messrohrs (3) geführten Gesamtwelle durch den ersten und/oder zweiten Schwingungswandler (5, 6, 15, 35), indem durch den jeweiligen Schwingungswandler (5, 6, 15, 35) in mehreren voneinander beabstandeten Anregungsbereichen (16, 17, 36, 37) jeweils in der Wand (9) geführte Teilwellen angeregt werden, die sich zu der jeweiligen Gesamtwelle überlagern, wobei der Abstand (20, 45) zwischen den Mitten (21, 22, 43, 44) der Anregungsbereiche (16, 17, 36, 37) und die Anregungsfrequenz derart gewählt sind, dass eine zu dämpfende Schwingungsmode durch eine destruktive Interferenz der Teilwellen zumindest in einer Ausbreitungsrichtung (23, 24, 39, 40) zumindest teilweise ausgelöscht wird, wobei die Anregungsbereiche (16, 17, 36, 37) in Ausbreitungsrichtung (23, 24, 39, 40) voneinander beabstandet sind,
- Anregen einer Kompressionsschwingung des Fluids durch die jeweilige Gesamtwelle
- Erfassen von die Kompressionsschwingung betreffenden Messdaten über den jeweils anderen Schwingungswandler (5, 6, 15, 35), und
- Ermitteln der Fluidgröße in Abhängigkeit der Messdaten,
**dadurch gekennzeichnet, dass**

• entweder die Anregungsfrequenz derart gewählt wird, dass eine angeregte weitere Schwingungsmode der Gesamtwelle die doppelte oder halbe Wellenlänge (25, 26) der zu dämpfenden Schwingungsmode aufweist,
• oder wobei ein Viertel der Wellenlänge (46) oder ein ungeradzahliges Vielfaches eines Viertels der Wellenlänge (46) der zu dämpfenden Schwingungsmode bei der gewählten Anregungsfrequenz als Abstand (45) zwischen den Mitten (43, 44) zweier Anregungsbereiche (36, 37) gewählt wird, wobei die Anregung mit einem Phasenversatz von 90° zwischen den Anregungsbereichen (36, 37) durchgeführt wird, wobei die zu dämpfende Schwingungsmode durch eine destruktive Interferenz der Teilwellen in der Ausbreitungsrichtung (23, 24, 39, 40) zumindest teilweise ausgelöscht wird und eine weitere zu dämpfende Schwingungsmode in einer zur Ausbreitungsrichtung entgegengesetzten weiteren Ausbreitungsrichtung (23, 24, 39, 40) durch eine destruktive Interferenz der Teilwellen in der weiteren Ausbreitungsrichtung zumindest teilweise ausgelöscht wird.

2. Verfahren nach Anspruch 1, **dadurch gekennzeichnet, dass** die halbe Wellenlänge (25) oder ein ungeradzahliges Vielfaches der halben Wellenlänge (25) der zu dämpfenden Schwingungsmode bei der gewählten Anregungsfrequenz als Abstand (20) zwischen den Mitten (21, 22) zweier Anregungsbereiche (16, 17) gewählt wird, wobei die Anregung in beiden Anregungsbereichen (16, 17) mit gleicher Phasenlage durchgeführt wird.

3. Verfahren nach Anspruch 1, **dadurch gekennzeichnet, dass** die Wellenlänge (26) oder ein vielfaches der Wellenlänge (26) der zu dämpfenden Schwingungsmode bei der gewählten Anregungsfrequenz als Abstand (20) zwischen den Mitten (21, 22) zweier Anregungsbereiche (16, 17) gewählt wird, wobei die Anregung mit einem Phasenversatz von 180° zwischen den Anregungsbereichen (16, 17) oder mit zueinander entgegengesetztem Anregungsverlauf durchgeführt wird.

4. Verfahren nach einem der vorangehenden Ansprüche, **dadurch gekennzeichnet, dass** die Anregungsfrequenz derart gewählt wird, dass ausschließlich die zu dämpfende und die weitere oder eine weitere Schwingungsmode angeregt werden.

5. Verfahren nach einem der vorangehenden Ansprüche, **dadurch gekennzeichnet, dass** zur Ermittlung der Fluidgröße oder einer weiteren Fluidgröße weitere Messdaten erfasst werden, wobei die Anregung in zwei der Anregungsbereiche (16, 17) zur Erfassung der Messdaten mit gleicher Phase und gleichem Anregungsverlauf und zur Erfassung der weiteren Messdaten mit einem Phasenversatz von 180° oder entgegengesetztem Anregungsverlauf erfolgt oder umgekehrt.

6. Verfahren nach einem der vorangehenden Ansprüche, **dadurch gekennzeichnet, dass** die Anregungsfrequenz derart gewählt ist, dass das Verhältnis der Wellenlänge $\lambda_0$ der zu dämpfenden Schwingungsmode zu der Wellenlänge

$\lambda_1$ der weiteren zu dämpfenden Schwingungsmode $\dfrac{\lambda_0}{\lambda_1} = \dfrac{2(2p+1)+(-1)^m}{2m+1}$ ist, wobei m und p jeweils Null oder eine positive ganze Zahl sind.

7. Verfahren nach einem der vorangehenden Ansprüche, **dadurch gekennzeichnet, dass** der erste und/oder der zweite Schwingungswandler (5, 6, 15, 35) jeweils mehrere Schwingelemente (18, 19, 41, 42) umfassen, durch die jeweils eine der Teilwellen angeregt wird.

8. Verfahren nach Anspruch 7, **dadurch gekennzeichnet, dass** die Schwingelemente (18, 19, 41, 42) piezoelektrische Schwingelemente sind.

9. Messeinrichtung zur Ermittlung einer ein Fluid und/oder eine Fluidströmung des Fluids betreffenden Fluidgröße, umfassend eine Steuereinrichtung (2, 38), ein das Fluid aufnehmendes und/oder von dem Fluid durchströmbares Messrohr (3) und einen ersten und einen zweiten voneinander beabstandet an dem Messrohr (3) angeordneten Schwingungswandler (5, 6, 15, 35), wobei die Steuereinrichtung (2, 38) dazu eingerichtet ist, den ersten und/oder zweiten Schwingungswandler (5, 6, 15, 35) anzusteuern, um eine jeweilige durch eine Wand (9) des Messrohrs (3) geführte Gesamtwelle anzuregen, indem durch den jeweiligen Schwingungswandler (5, 6, 15, 35) in mehreren voneinander beabstandeten Anregungsbereichen (16, 17, 36, 37) jeweils in der Wand (9) geführte Teilwellen angeregt werden, die sich zu der jeweiligen Gesamtwelle überlagern, wobei der Abstand (20, 45) zwischen den Mitten (21, 22, 43, 44) der Anregungsbereiche (16, 17, 36, 37) und die Anregungsfrequenz derart gewählt sind, dass eine zu dämpfende Schwingungsmode durch eine destruktive Interferenz der Teilwellen zumindest in einer Ausbreitungsrichtung (23, 24, 39, 40) zumindest teilweise ausgelöscht wird, wobei durch die jeweilige Gesamtwelle Kompressionsschwingungen des Fluids anregbar sind, die über das Fluid zu dem jeweils anderen Schwingungswandler (5, 6, 15, 35) führbar und dort durch die Steuereinrichtung (2, 38) zur Ermittlung von Messdaten erfassbar sind, wobei die Fluidgröße durch die Steuereinrichtung (2, 38) in Abhängigkeit der Messdaten ermittelbar ist, wobei die Anregungsbereiche (16, 17, 36, 37) in Ausbreitungsrichtung (23, 24, 39, 40) voneinander beabstandet sind, **dadurch gekennzeichnet, dass** sie zur Durchführung des Verfahrens nach einem der vorangehenden Ansprüche eingerichtet ist.

10. Messeinrichtung nach Anspruch 9, **dadurch gekennzeichnet, dass** der erste und/oder der zweite Schwingungswandler (5, 6, 15, 35) jeweils mehrere Schwingelemente (18, 19, 41, 42) umfassen, wobei in jedem der Anregungsbereiche (16, 17, 36, 37) wenigstens ein jeweiliges Schwingelement (18, 19, 41, 42) direkt oder über wenigstens ein Kopplungselement (31) mit dem Messrohr (3) gekoppelt ist.

11. Messeinrichtung nach Anspruch 10, **dadurch gekennzeichnet, dass** die Steuereinrichtung (2) ein gemeinsames Ansteuersignal für die Schwingelemente (16, 17) des jeweiligen Schwingwandlers (5, 6, 15) bereitstellt, wobei das Ansteuersignal wenigstens einem Schwingelement (16) direkt und wenigstens einem Schwingelement (17) mit umgekehrter Polarität zugeführt wird, wodurch ein zueinander entgegengesetzter Anregungsverlauf der Schwingelemente (16, 17) resultiert, oder wobei das Anregungssignal allen Schwingelementen (16, 17) direkt zugeführt wird.

12. Messeinrichtung nach Anspruch 10, **dadurch gekennzeichnet, dass** die Steuereinrichtung (38) dazu eingerichtet ist, für wenigstens zwei der Schwingelemente (41, 42) Ansteuersignale bereitzustellen, die zueinander phasenverschoben sind oder einen zueinander entgegengesetzten Signalverlauf aufweisen.

**Claims**

1. Method for ascertaining a fluid variable relating to a fluid and/or a fluid flow of the fluid using a measuring device (1) comprising a measuring tube (3) that receives the fluid and/or through which the fluid is able to flow and a first and a second oscillation transducer (5, 6, 15, 35), spaced apart from one another, disposed at the measuring tube (3), said method comprising the steps of:

- exciting by way of the first and/or second oscillation transducer (5, 6, 15, 35) a respective overall wave which is guided through a wall (9) of the measuring tube (3), by virtue of the respective oscillation transducer (5, 6, 15, 35) being used to excite partial waves, respectively guided in the wall (9), in a plurality of spaced apart excitation regions (16, 17, 36, 37), said partial waves superposing to form the respective overall wave, wherein the distance (20, 45) between the centres (21, 22, 43, 44) of the excitation regions (16, 17, 36, 37) and the excitation frequency are chosen in such a way that an oscillation mode to be damped is at least partly cancelled by destructive interference of the partial waves, at least in one propagation direction (23, 24, 39, 40), wherein the excitation regions (16, 17, 36, 37) are spaced apart from one another in the propagation direction (23, 24, 39, 40),
- exciting a compression oscillation of the fluid by the respective overall wave,
- capturing measurement data relating to the compression oscillation by way of the respective other oscillation transducer (5, 6, 15, 35), and
- ascertaining the fluid variable on the basis of the measurement data,
**characterized in that**

• either the excitation frequency is chosen such that an excited further oscillation mode of the overall wave has twice or half the wavelength (25, 26) of the oscillation mode to be damped,
• or a quarter of the wavelength (46) or an odd multiple of a quarter of the wavelength (46) of the oscillation mode to be damped is chosen as the distance (45) between the centres (43, 44) of two excitation regions (36, 37) at the chosen excitation frequency, wherein the excitation is carried out with a phase offset of 90° between the excitation regions (36, 37), wherein the oscillation mode to be damped is at least partly cancelled by destructive interference of the partial waves in the propagation direction (23, 24, 39, 40) and a further oscillation mode to be damped is at least partly cancelled in a further propagation direction (23, 24, 39, 40), opposite to the propagation direction, by way of destructive interference of the partial waves in the further propagation direction.

2. Method according to Claim 1, **characterized in that** the half wavelength (25) or an odd multiple of half the wavelength (25) of the oscillation mode to be damped is chosen as a distance (20) between the centres (21, 22) of two excitation regions (16, 17) at the chosen excitation frequency, wherein the excitation in both excitation regions (16, 17) is carried out using the same phase angle.

3. Method according to Claim 1, **characterized in that** the wavelength (26) or a multiple of the wavelength (26) of the oscillation mode to be damped is chosen as a distance (20) between the centres (21, 22) of two excitation regions (16, 17) at the chosen excitation frequency, wherein the excitation is carried out with a phase offset of 180° between the excitation regions (16, 17) or with mutually opposing excitation profiles.

4. Method according to any one of the preceding claims, **characterized in that** the excitation frequency is chosen in such a way that only the oscillation mode to be damped and the further oscillation mode or a further oscillation mode are excited.

5. Method according to any one of the preceding claims, **characterized in that** further measurement data are captured for ascertaining the fluid variable or a further fluid variable, wherein the excitation is implemented in two of the excitation regions (16, 17) with the same phase and the same excitation profile for the purposes of capturing the measurement data and with a phase offset of 180° or opposing excitation profile for the purposes of capturing the further measurement data, or vice versa.

6. Method according to any one of the preceding claims, **characterized in that** the excitation frequency is chosen in such a way that the ratio of the wavelength $\lambda_0$ of the oscillation mode to be damped to the wavelength $\lambda_1$ of the further oscillation mode to be damped is $\frac{\lambda_0}{\lambda_1} = \frac{2(2p+1)+(-1)^m}{2m+1}$, where m and p are each zero or a positive integer.

7. Method according to any one of the preceding claims, **characterized in that** the first and/or the second oscillation transducer (5, 6, 15, 35) each comprise a plurality of vibrating elements (18, 19, 41, 42), by means of which respectively one of the partial waves is excited.

8. Method according to Claim 7, **characterized in that** the vibrating elements (18, 19, 41, 42) are piezoelectric vibrating elements.

9. Measuring device for ascertaining a fluid variable relating to a fluid and/or a fluid flow of the fluid, comprising a control device (2, 38), a measuring tube (3) that receives the fluid and/or through which the fluid is able to flow and a first and a second oscillation transducer (5, 6, 15, 35), spaced apart from one another, disposed at the measuring tube (3), wherein the control device (2, 38) is configured to drive the first and/or second oscillation transducer (5, 6, 15, 35) in order to excite a respective overall wave, which is guided through a wall (9) of the measuring tube (3), by virtue of partial waves respectively guided in the wall (9) being excited by the respective oscillation transducer (5, 6, 15, 35) in a plurality of spaced apart excitation regions (16, 17, 36, 37), which partial waves superpose to form the respective overall wave, wherein the distance (20, 45) between the centres (21, 22, 43, 44) of the excitation regions (16, 17, 36, 37) and the excitation frequency are chosen in such a way that an oscillation mode to be damped is at least partly cancelled in at least one propagation direction (23, 24, 39, 40) by a destructive interference of the partial waves, wherein compression oscillations of the fluid are excitable by the respective overall wave, which compression oscillations are guidable by the fluid to the respective other oscillation transducer (5, 6, 15, 35) and are capturable thereby the control device (2, 38) for ascertaining measurement data, wherein the fluid variable is ascertainable by the control device (2, 38) on the basis of the measurement data, wherein the excitation regions (16, 17, 36, 37) are spaced apart in the propagation direction (23, 24, 39, 40), **characterized in that** said measuring device is configured to carry out the method according to any one of the preceding claims.

10. Measuring device according to Claim 9, **characterized in that** the first and/or the second oscillation transducer (5, 6, 15, 35) each comprise a plurality of vibrating elements (18, 19, 41, 42), wherein at least one respective vibrating element (18, 19, 41, 42) is directly coupled, or coupled via at least one coupling element (31), to the measuring tube (3) in each of the excitation regions (16, 17, 36, 37).

11. Measuring device according to Claim 10, **characterized in that** the control device (2) provides a common driving signal for the vibrating elements (16, 17) of the respective oscillation transducer (5, 6, 15), wherein the driving signal is fed directly to at least one vibrating element (16) and with a reversed polarity to at least one vibrating element (17), as a result of which a mutually opposing excitation profile of the vibrating elements (16, 17) emerges, or wherein the excitation signal is directly fed to all vibrating elements (16, 17).

12. Measuring device according to Claim 10, **characterized in that** the control device (38) is configured to provide driving signals for at least two of the vibrating elements (41, 42), which driving signals are phase shifted with respect to one another or have a mutually opposing signal profile.

## Revendications

1. Procédé permettant de déterminer une grandeur de fluide concernant un fluide et/ou un écoulement de fluide du fluide avec un dispositif de mesure (1) qui comprend un tube de mesure (3) recevant le fluide et/ou pouvant être traversé par le fluide, et un premier et un deuxième transducteur de vibrations (5, 6, 15, 35) disposés de manière espacée l'un de l'autre sur le tube de mesure (3) comprenant les étapes consistant à :

   - exciter une onde totale respective, guidée à travers une paroi (9) du tube de mesure (3), par le premier et/ou le deuxième transducteur de vibrations (5, 6, 15, 35) en ce que le transducteur de vibrations (5, 6, 15, 35) respectif excite dans plusieurs zones d'excitation (16, 17, 36, 37) espacées les unes des autres des ondes partielles guidées dans la paroi (9), respectivement, qui se chevauchent pour former l'onde totale respective, la distance (20, 45) entre les centres (21, 22, 43, 44) des zones d'excitation (16, 17, 36, 37) et la fréquence d'excitation étant sélectionnées de telle sorte qu'un mode de vibration à amortir est effacé au moins en partie par une interférence destructive des ondes partielles au moins dans une direction de propagation (23, 24, 39, 40), les zones d'excitation (16, 17, 36, 37) étant espacées les unes des autres dans la direction de propagation (23, 24, 39, 40),
   - exciter une vibration de compression du fluide par l'onde totale respective,
   - détecter des données de mesure concernant la vibration de compression par l'autre transducteur de vibrations (5, 6, 15, 35), respectivement, et
   - déterminer la grandeur de fluide en fonction des données de mesure,
   **caractérisé en ce que**

   • soit la fréquence d'excitation est sélectionnée de telle sorte qu'un mode de vibration supplémentaire excité de l'onde totale présente deux fois la longueur d'onde ou la moitié de la longueur d'onde (25, 26) du mode de vibration à amortir,
   • soit un quart de la longueur d'onde (46) ou un multiple impair d'un quart de la longueur d'onde (46) du mode de vibration à amortir à la fréquence d'excitation sélectionnée est sélectionné comme la distance (45) entre les centres (43, 44) de deux zones d'excitation (36, 37), l'excitation étant effectuée avec un décalage de phase de 90° entre les zones d'excitation (36, 37), dans lequel le mode de vibration à amortir est effacé au moins en partie par une interférence destructive des ondes partielles dans la direction de propagation (23, 24, 39, 40) et un mode de vibration supplémentaire à amortir est effacé au moins en partie dans une direction de propagation supplémentaire (23, 24, 39, 40), opposée à la direction de propagation, par une interférence destructive des ondes partielles dans la direction de propagation supplémentaire.

2. Procédé selon la revendication 1, **caractérisé en ce que** la demi-longueur d'onde (25) ou un multiple impair de la demi-longueur d'onde (25) du mode de vibration à amortir à la fréquence d'excitation sélectionnée est sélectionnée comme la distance (20) entre les centres (21, 22) de deux zones d'excitation (16, 17), l'excitation étant effectuée dans les deux zones d'excitation (16, 17) avec la même position de phase.

3. Procédé selon la revendication 1, **caractérisé en ce que** la longueur d'onde (26) ou un multiple de la longueur d'onde (26) du mode de vibration à amortir à la fréquence d'excitation sélectionnée est sélectionnée comme la distance (20) entre les centres (21, 22) de deux zones d'excitation (16, 17), l'excitation étant effectuée avec un décalage de phase de 180° entre les zones d'excitation (16, 17) ou avec une courbe d'excitation mutuellement opposée.

4. Procédé selon l'une quelconque des revendications précédentes, **caractérisé en ce que** la fréquence d'excitation est sélectionnée de telle sorte que seul le mode de vibration à amortir et le mode supplémentaire ou un mode supplémentaire sont excités.

5. Procédé selon l'une quelconque des revendications précédentes, **caractérisé en ce que** pour la détermination de la grandeur de fluide ou d'une grandeur de fluide supplémentaire, des données de mesure supplémentaires sont détectées, dans lequel l'excitation est effectuée dans deux des zones d'excitation (16, 17) pour détecter les données de mesure de même phase et de même courbe d'excitation, et pour détecter les données de mesure supplémentaires ayant un décalage de phase de 180° ou une courbe d'excitation opposée, ou vice versa.

6. Procédé selon l'une quelconque des revendications précédentes, **caractérisé en ce que** la fréquence d'excitation est sélectionnée de telle sorte que le rapport entre la longueur d'onde $\dot{\lambda}_0$ du mode de vibration à amortir et la longueur d'onde $\lambda_1$ du mode de vibration a amortir supplémentaire est $\frac{\lambda_0}{\lambda_1} = \frac{2(2p+1)+(-1)^m}{2m+1}$, ou m et p sont respectivement zéro ou un nombre entier positif.

7. Procédé selon l'une quelconque des revendications précédentes, **caractérisé en ce que** le premier et/ou le deuxième transducteur de vibrations (5, 6, 15, 35) comprennent respectivement plusieurs éléments de vibration (18, 19, 41, 42) qui excitent respectivement l'une des ondes partielles.

8. Procédé selon la revendication 7, **caractérisé en ce que** les éléments de vibration (18, 19, 41, 42) sont des éléments de vibration piézoélectriques.

9. Dispositif de mesure permettant de déterminer une grandeur de fluide concernant un fluide et/ou un écoulement de fluide du fluide, comprenant un dispositif de commande (2, 38), un tube de mesure (3) recevant le fluide et/ou pouvant être traversé par le fluide, et un premier et un deuxième transducteur de vibration (5, 6, 15, 35) disposés sur le tube de mesure (3) de manière espacée l'un de l'autre, le dispositif de commande (2, 38) étant conçu pour piloter le premier et/ou le deuxième transducteur de vibrations (5, 6, 15, 35) afin d'exciter une onde totale respective, guidée à travers une paroi (9) du tube de mesure (3), en ce que le transducteur de vibrations (5, 6, 15, 35) respectif excite dans plusieurs zones d'excitation (16, 17, 36, 37) espacées les unes des autres des ondes partielles guidées dans la paroi (9), respectivement, qui se chevauchent pour former l'onde totale respective, dans lequel la distance (20, 45) entre les centres (21, 22, 43, 44) des zones d'excitation (16, 17, 36, 37) et la fréquence d'excitation sont sélectionnées de telle sorte qu'un mode de vibration à amortir est effacé au moins en partie par une interférence destructive des ondes partielles au moins dans une direction de propagation (23, 24, 39, 40), dans lequel l'onde totale respective permet d'exciter des vibrations de compression du fluide qui peuvent être guidées par le fluide jusqu'à l'autre transducteur de vibrations (5, 6, 15, 35), respectivement, et peuvent y être détectées par le dispositif de commande (2, 38) pour déterminer des données de mesure, dans lequel la grandeur de fluide peut être déterminée par le dispositif de commande (2, 38) en fonction des données de mesure, les zones d'excitation (16, 17, 36, 37) étant espacées les unes des autres dans la direction de propagation (23, 24, 39, 40), **caractérisé en ce qu'**il est conçu pour exécuter le procédé selon l'une quelconque des revendications précédentes.

10. Dispositif de mesure selon la revendication 9, **caractérisé en ce que** le premier et/ou le deuxième transducteur de vibrations (5, 6, 15, 35) comprennent respectivement plusieurs éléments de vibration (18, 19, 41, 42), dans lequel, dans chacune des zones d'excitation (16, 17, 36, 37), au moins un élément de vibration respectif (18, 19, 41, 42) est couplé directement ou par au moins un élément de couplage (31) au tube de mesure (3).

11. Dispositif de mesure selon la revendication 10, **caractérisé en ce que** le dispositif de commande (2) fournit un signal de pilotage commun pour les éléments de vibration (16, 17) du transducteur de vibrations (5, 6, 15) respectif, dans lequel le signal de pilotage est amené directement à au moins un élément de vibration (16) et est amené à au moins un élément de vibration (17) à polarité inversée, de sorte qu'il en résulte une courbe d'excitation mutuellement opposée des éléments de vibration (16, 17), ou dans lequel le signal d'excitation est amené directement à tous les éléments de vibration (16, 17).

12. Dispositif de mesure selon la revendication 10, **caractérisé en ce que** le dispositif de commande (38) est conçu pour fournir à au moins deux des éléments de vibration (41, 42) des signaux de pilotage qui sont en décalage en phase l'un par rapport à l'autre ou qui présentent une courbe de signal mutuellement opposée.

FIG. 1

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012019217 A1

**In der Beschreibung aufgeführte Nicht-Patentliteratur**

- **G. LINDNER.** Sensors and actuators based on surface acoustic waves propagating along solid-liquid interfaces. *J. Phys. D: Appl. Phys.,* 2008, vol. 41, 123002